# EUROPÄISCHE PATENTSCHRIFT

(11) **EP 2 345 696 B1**
(45) Veröffentlichungstag und Bekanntmachung des Hinweises auf die Patenterteilung: **03.07.2013**
(21) Anmeldenummer: 10194821.4
(22) Anmeldetag: 14.12.2010
(51) Int. Cl.: C08L 9/06, C08L 15/00, B60C 1/00, C08K 3/36, C08L 7/00, C08L 9/00

(54) **Kautschukmischung mit verbessertem Rollwiderstand und verbessertem Trockenbremsen**
Rubber mixture with improved roll resistance and improved dry braking
Mélange de caoutchouc doté d'une résistance au roulement améliorée et d'un freinage sur sol sec amélioré

(30) Priorität: 12.01.2010 DE 102010000052
(43) Veröffentlichungstag der Anmeldung: 20.07.2011
(73) Patentinhaber: Continental Reifen Deutschland GmbH, 30165 Hannover (DE)
(72) Erfinder: Wagemann, Jürgen, 31162, Bad Salzdethfurth (DE); Weinreich, Hajo, 31552, Apelern (DE); Tkachenko, Viktoriya, 30171, Hannover (DE); Recker, Carla, 30167, Hannover (DE)
(74) Vertreter: Finger, Karsten

(56) Entgegenhaltungen:
- EP-A1- 1 529 806
- EP-A1- 2 098 384
- EP-A1- 2 098 564
- DE-A1-102006 031 566
- US-A1- 2004 054 032

## Beschreibung

Die Erfindung betrifft eine Kautschukmischung, insbesondere für Fahrzeugluftreifen, Gurte, Riemen und Schläuche.

Die Kautschukzusammensetzung des Laufstreifens bestimmt in hohem Maße die Fahreigenschaften eines Reifens, insbesondere eines Fahrzeugluftreifens. Ebenso sind die Kautschukmischungen, die in Riemen, Schläuchen und Gurten Verwendung vor allem in den mechanisch stark belasteten Stellen finden, für Stabilität und Langlebigkeit dieser Gummiartikel im Wesentlichen verantwortlich. Daher werden an diese Kautschukmischungen für Fahrzeugluftreifen, Gurte, Riemen und Schläuche sehr hohe Anforderungen gestellt.
Durch den teilweisen oder vollständigen Ersatz des Füllstoffes Ruß durch Kieselsäure in Kautschukmischungen wurden z.B. die Fahreigenschaften eines Reifens in den vergangenen Jahren insgesamt auf ein höheres Niveau gebracht. Die bekannten Zielkonflikte der sich gegensätzlich verhaltenden Reifeneigenschaften, bestehen allerdings auch bei kieselsäurehaltigen Laufstreifenmischungen weiterhin. So zieht eine Verbesserung des Nassgriffs und des Trockenbremsens weiterhin in der Regel eine Verschlechterung des Rollwiderstandes, der Wintereigenschaften und des Abriebverhaltens nach sich. Diese Eigenschaften sind auch bei technischen Gummiartikeln, wie Gurte, Riemen und Schläuche, ein wichtiges Qualitätskriterium.

Um diese Zielkonflikte zu lösen, sind schon vielfältige Ansätze verfolgt worden. So hat man beispielsweise unterschiedlichste, auch modifizierte, Polymere, Weichmacher und hochdisperse Füllstoffe für Kautschukmischungen eingesetzt und man hat versucht, die Vulkanisateigenschaften durch Modifikation der Mischungsherstellung zu beeinflussen.

Neben Kautschuk und Füllstoffen bilden die Weichmacher zum Beispiel eine Klasse von Zuschlagstoffen. Weichmacher werden Kautschukmischungen zum Teil in großen Mengen zugesetzt, um dem Mischungspreis zu senken, die Fließeigenschaften der Mischung zu verbessern (Energieeinsparung bei der Verarbeitung, Vermeidung von Energiespitzen), die Füllstoffdispersion zu verbessern, und / oder das Konfektionier- und das Klebverhalten zu verbessern. Gleichzeitig sollen sich durch diese Maßnahme natürlich die physikalischen Eigenschaften der Mischung und der daraus hergestellten Vulkanisate nicht verschlechtern.

So ist es beispielsweise aus EP1529806B1 bekannt, dass sich in Kautschukmischungen, insbesondere für den Laufstreifen eines Fahrzeugluftreifens, bei dem Austausch eines Standard-Mineralölweichmachers durch ein Flüssigpolymer mit einem Molekulargewicht M_{w} zwischen 1500 g/mol und 10000 g/mol das Abriebverhalten der Kautschukmischung verbessert. Gleichzeitig verschlechtern sich allerdings der Rollwiderstand und das Trockenbremsen. In EP1529806B1 wird versucht Letztgenanntes durch Einsatz von Hochstrukturruß aufzufangen.

Aus US 2004/024813A1 ist es bekannt zur Verbesserung des Abriebverhaltens ein Dienelastomer mit einem mittleren Molekulargewicht Mₙ kleiner al 2000 g/mol und einer Glasübergangstemperatur größer als -25°C und enthaltend eine oder mehr Einheiten resultierend aus der Polymerisation eines vinylaromatischen Monomers einzusetzen. In den in dieser Druckschrift aufgezeigten Beispielen zeigt sich allerdings ebenso eine Verschlechterung des Rollwiderstands- und Trockenbremsverhaltens.

Aus EP2 098 384 ist es bekannt, dass durch Bereichstellung einer versetzbarer Kautschukmischung mit 80-100 phr funktionalisierter SSBR und/oder ES BER Dienkautschuk, Reifer die sowohl eine gute Winterperformance, Nassbrems-Verhalterund Abrieb aufweisen als auch die geforderter Eigennhaften auf dem Gebiet des Trockenbremsen und Handlungsaufzeigen, hergestellt werden können.

Der Erfindung liegt daher die Aufgabe zu Grunde, eine Kautschukmischung, insbesondere für Fahrzeugluftreifen, Gurte und Riemen, bereitzustellen, die ein verbessertes Abriebverhalten bei gleich bleibendem oder verbessertem Rollwiderstandsverhalten und bei gleich bleibendem oder verbessertem Trockenbremsen aufweist.

Gelöst wird diese Aufgabe durch eine Kautschukmischung mit folgender Zusammensetzung:
- 40 bis 95 phr zumindest eines vollständig oder teilweise funktionalisierten Styrolbutadienkautschuks und
- 5 bis 60 phr zumindest eines weiteren polaren oder unpolaren Kautschuks
   und
- 0,01 bis 35 phr zumindest eines Rußes und
- 10 bis 250 phr zumindest einer Kieselsäure mit einer CTAB-Oberfläche gemäß ASTM D 3765 zwischen 170 und 400 m²/g und
- 0,1 bis 100 phr zumindest eines flüssigen Polymers mit einem mittleren Molgewicht M_{w} zwischen 150 und 1500 g/mol und einer Glasübergangstemperatur T_{g} kleiner oder gleich -30°C und
- weitere Zusatzstoffe.

Überraschenderweise wurde gefunden, dass sich durch die Kombination von 40 bis 95 phr zumindest eines teilweise oder vollständig funktionalisierten Styrolbutadienkautschuks und vergleichsweise geringen Mengen zumindest eines Rußes und 10 bis 250 phr zumindest einer Kieselsäure mit einer CTAB-Oberfläche gemäß ASTM D3765 zwischen 200 und 400m²/g, und 0,1 bis 100 phr zumindest eines flüssigen Polymers mit einem vergleichsweise sehr niedrigen mittleren Molekulargewicht M_{w} zwischen 150 und 1500 g/mol und einer Glasübergangstemperatur T_{g} kleiner oder gleich -30°C das Rollwiderstandsverhalten und gleichzeitig das Trockenbremsverhalten gleich bleiben, während sich das Abriebsverhaltens der erfindungsgemäßen Kautschukmischung deutlich verbessert.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die Kautschukmischung enthält 40 bis 95 phr, bevorzugt 50 bis 95 phr und besonders bevorzugt 60 bis 95 phr, zumindest eines teilweise oder vollständig funktionalisierten Styrolbutadienkautschuks. Die Funktionalisierung findet hierbei vorzugsweise durch Hydroxylgruppen und / oder Epoxygruppen und / oder Siloxangruppen und / oder Aminogruppen und / oder Phtalocyaningruppen und / oder Aminosiloxangruppen und / oder mit Carboxygruppen statt. Es kommen aber auch weitere, der fachkundigen Person bekannte Funktionalisierungen, auch als Modifizierungen bezeichnet, in Frage.

Bevorzugt ist es allerdings, wenn der Styrolbutadienkautschuk teilweise oder vollständig mit Aminogruppen und / oder mit Aminosiloxangruppen und/ oder mit Hydroxylgruppen funktionalisiert ist.

Es ist auch durchaus möglich, dass der Styrolbutadienkautschuk mit unterschiedlichen Gruppen funktionalisiert ist. Beispielsweise kann an jedem Kettenende eine unterschiedliche Funktionalisierung vorhanden sein.
Der Styrolbutadienkautschuk ist vorzugsweise lösungspolymerisiert (SSBR) oder emulsionspolymerisiert (ESBR). Eine Mischung aus teilweise oder vollständig funktionalisiertem SSBR mit teilweise oder vollständig funktionalisiertem ESBR ist möglich.
Ebenso können die genannten Kautschuke vollständig oder teilweise gekoppelt sein, jeweils mit vollständiger oder teilweiser Funktionalisierung oder frei von Funktionalisierung.

Weiterhin enthält die Kautschukmischung 5 bis 60 phr, bevorzugt 5 bis 50 phr, besonders bevorzugt 5 bis 40 phr, zumindest eines weiteren polaren oder unpolaren Kautschuks, welcher ausgewählt ist aus der Gruppe, bestehend aus natürlichem Polyisopren und / oder synthetischem Polyisopren und / oder Butadien-Kautschuk und / oder Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer und / oder hydrierter Nitrilkautschuk und / oder Isopren-Butadien-Copolymer.
Es hat sich als vorteilhaft gezeigt, wenn es sich hierbei um ein natürliches (NR) oder synthetisches (IR) Polyisopren und / oder einen Butadienkautschuk (BR) handelt.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, zum Einsatz.

Des Weiteren enthält die erfindungsgemäße Kautschukmischung 0,01 bis 35 phr, bevorzugt 0,1 bis 25 phr, besonders bevorzugt 1 bis 25 phr, zumindest eines Rußes. Hier kommen alle der fachkundigen Person bekannten Ruße in Frage.
In einer besonders bevorzugten Ausführungsform hat der Ruß eine Iodzahl, gemäß ASTM D 1510, die auch als Iodadsorptionszahl bezeichnet wird, größer oder gleich 80 g / kg und einer DBP-Zahl größer oder gleich 100 cm³ /100g, bevorzugt größer oder gleich 110 cm³ /100g, besonders bevorzugt größer oder gleich 115 cm³ /100g. Die DBP-Zahl gemäß ASTM D 2414 bestimmt das spezifische Absorptions-volumen eines Rußes oder eines hellen Füllstoffes mittels Dibutylphthalat.

Die Verwendung eines solchen Russtyps in der Kautschukmischung, insbesondere für Fahrzeugluftreifen, gewährleistet einen bestmöglichen Kompromiss aus Abriebwiderstand und Wärmeaufbau, der wiederum den ökologisch relevanten Rollwiderstand beeinflusst. Bevorzugt ist hierbei, wenn lediglich ein Russtyp in der jeweiligen Kautschukmischung verwendet wird, es können aber auch verschiedene Russtypen in die Kautschukmischung eingemischt werden.

Die erfindungsgemäße Kautschukmischung enthält 10 bis 250 phr, bevorzugt 20 bis 200 phr, besonders bevorzugt 30 bis 150 phr, wiederum besonders bevorzugt 50 bis 100 phr, wiederum ganz besonders bevorzugt 80 -100 phr, Kieselsäure. Erfindungswesentlich ist es, dass es sich bei der Kieselsäure um einen so genannten hochdispergierbaren Kieselsäuretyp mit einer CTAB-Oberfläche gemäß ASTM D 3765 zwischen 170 und 400 m²/g, bevorzugt zwischen 180 und 300 m²/g, besonders bevorzugt zwischen 200 und 300 m²/g, handelt. Nur dann zeigen sich in Kombination mit dem verwendeten flüssigen Polymer und dem beschriebenen Styrolbutadienkautschuk die oben genannten Vorteile. Die in der Reifenindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.

Falls ein Kupplungsagens, in Form von Silan oder einer siliziumorganischen Verbindung, verwendet wird, so beträgt die Menge des Kupplungsagens 0 ― 20 phr, bevorzugt 0,1 ―15 phr, besonders bevorzugt 0,5 ―10 phr. Als Kupplungsagenzien können dabei alle dem Fachmann für die Verwendung in Kautschukmischungen Kupplungsagenzien verwendet werden. Besonders zu erwähnen sind hierbei Mercaptosilane und hierbei insbesondere solche, welche sich durch eine Reduzierung der leicht flüchtigen organischen Bestandteile auszeichnen, wie sie, beispielhaft für weitere Druckschriften, in DE 10 2005 057 801, WO99/09036, WO2002/048256 und WO2006/015010 zu finden sind.

Erfindungswesentlich ist ebenso, dass die Kautschukmischung 0,1 bis 100 phr, bevorzugt 1 bis 90 phr, besonders bevorzugt 10 bis 80 phr, zumindest eines flüssigen Polymers mit einem mittleren Molgewicht M_{w} zwischen 150 und 1500 g/mol, bevorzugt zwischen 150 und 1300 g/mol, besonders bevorzugt zwischen 150 und 1100 g/mol, und einer Glasübergangtemperatur kleiner oder gleich -30°C, bevorzugt kleiner oder gleich - 65°C, besonders bevorzugt kleiner oder gleich -75°C, enthält.

Nur bei Verwendung eines derartigen flüssigen Polymers in Kombination mit einem obig beschriebenen hochdispergierbaren Kieselsäuretyp, jeweils in den angegebenen Mengenbereichen, ist es möglich das das Rollwiderstandsverhalten und das Trockenbremsverhalten eines Reifens, der eine erfindungsgemäße Kautschukmischung, vorzugsweise als Laufstreifen, enthält, auf gleichem Level verbleiben oder sich verbesseren und gleichzeitig das Abriebsverhalten deutlich optimiert wird. Gleichzeitig wird dadurch überraschenderweise auch das Verhalten des Reifens auf winterlichen Fahrbahnen auf einem ähnlichen Niveau gehalten oder sogar verbessert. Dies ist insofern überraschend als sich die Eigenschaften Trockenbremsen und Schneegriff üblicherweise in einem deutlichen Zielkonflikt befinden.

Vorteilhafterweise besitzt das flüssige Polymer einen Vinylanteil von 0,1 bis 30 Gew. -%, bevorzugt von 1 bis 25 Gew. -%.
Als zweckmäßig hat sich hierbei die Verwendung eines flüssigen Polybutadienkautschuks mit den genannten Eigenschaften gezeigt.

Es können in der Kautschukmischung noch 0 bis 60 phr, bevorzugt 0,1 bis 50 phr, bevorzugt 0,1 bis 40 phr, zumindest eines weiteren zusätzlichen Weichmachers vorhanden sein. Dieser weitere Weichmacher ist ausgewählt aus der Gruppe, bestehend aus Mineralölen und / oder synthetischen Weichmachern und / oder Fettsäuren und / oder Fettsäurederivaten und / oder Harzen und / oder Faktisse und / oder Glyceriden und / oder Terpenen und / oder Biomass-To-Liquid-Ölen (BTL-Öle).

Bei der Verwendung von Mineralöl ist dieses bevorzugt ausgewählt aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle.

Weiterhin enthält die Kautschukmischung noch weitere Zusatzstoffe.
Weitere Zusatzstoffe beinhaltet im Wesentlichen das Vernetzungssystem (Vernetzer, Schwefelspendern und / oder elementarer Schwefel, Beschleuniger und Verzögerer), Ozonschutzmittel, Alterungsschutzmittel, Mastikationshilfsmittel, Verarbeitungshilfsmittel und weitere Aktivatoren.
Der Mengenanteil der Gesamtmenge an weiteren Zusatzstoffen beträgt 3 bis 150 phr, bevorzugt 3 bis 100 phr und besonders bevorzugt 5 ― 80 phr.

Im Gesamtmengenanteil der weiteren Zusatzstoffe finden sich noch 0,1 ― 10 phr, bevorzugt 0,2 ― 8 phr, besonders bevorzugt 0,2 ― 4 phr, Zinkoxid.
Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert. Das herkömmlicherweise verwendete Zinkoxid weist dabei in der Regel eine BET-Oberfläche von weniger als 10 m²/g auf. Es kann aber auch so genanntes nano-Zinkoxid mit einer BET-Oberfläche von 10 bis 60 m²/g verwendet werden.

Die Vulkanisation der Kautschukmischung wird vorzugsweise in Anwesenheit von elementarem Schwefel und / oder Schwefelspendern durchgeführt, wobei einige Schwefelspender zugleich als Vulkanisationsbeschleuniger wirken können. Elementarer Schwefel und / oder Schwefelspender werden im letzten Mischungsschritt in den vom Fachmann gebräuchlichen Mengen (0,4 bis 9 phr, elementarer Schwefel bevorzugt in Mengen von 0 bis 6 phr, besonders bevorzugt in Mengen von 0,1 bis 3 phr) der Kautschukmischung zugesetzt. Zur Kontrolle der erforderlichen Zeit und / oder Temperatur der Vulkanisation und zur Verbesserung der Vulkanisateigenschaften kann die Kautschukmischung vulkanisationsbeeinflussende Substanzen wie Vulkanisationsbeschleuniger, Vulkanisationsverzögerer, die erfindungsgemäß in den obig beschriebenen Zusatzstoffen enthalten sind, und Vulkanisationsaktivatoren, wie obig beschrieben, enthalten.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Der Erfindung liegt weiterhin die Aufgabe zu Grunde, obig beschriebene Kautschukmischung, zur Herstellung von Fahrzeugluftreifen, insbesondere zur Herstellung des Laufstreifens eines Reifens und / oder einer Body-Mischung eines Reifens und zur Herstellung von Riemen, Gurten und Schläuchen zu verwenden.
Der Begriff Body-Mischung beinhaltet hierbei im Wesentlichen Seitenwand, Innenseele, Apex, Gürtel, Schulter, Gürtelprofil, Squeege, Karkasse, Wulstverstärker und / oder Bandage.

Zur Verwendung in Fahrzeugluftreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Ist der Laufstreifen, wie eingangs beschrieben, zweigeteilt, so findet die Kautschukmischung bevorzugt Anwendung als Mischung für die Base.
Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings. Zur Verwendung der erfindungsgemäßen Kautschukmischung in Riemen und Gurten, insbesondere in Fördergurten, wird die extrudierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und / oder mehrerer Lagen Kautschukmischung, einer und / oder mehrerer Lagen gleicher und / oder verschiedener Festigkeitsträger und einer und / oder mehreren weiteren Lagen dergleichen und / oder einer anderen Kautschukmischung.

Zur Verwendung der erfindungsgemäßen Kautschukmischung in Schläuchen wird häufig keine so genannte Schwefelvernetzung, sondern eine peroxidische Vernetzung bevorzugt.
Die Herstellung der Schläuche erfolgt analog dem im Handbuch der Kautschuktechnologie, Dr. Gupta Verlag, 2001, Kapitel 13.4 beschriebenen Verfahren.

Die Erfindung soll nun anhand von Vergleichs- und Ausführungsbeispielen, die in Tabelle 1 zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt.
Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

Die in der Tabelle 2 zusammengefassten Versuchsergebnisse wurden an Reifen der Größe 205/55 R16 ermittelt. Hierzu wurde jeweils die Kautschukmischung für die Lauffläche des Reifens analog den in der Tabelle 1 dargestellten Zusammensetzungen hergestellt. Alle Ergebnisse sind als relative Bewertung mit einer Basis von 100% für den Reifen V1 angegeben. Werte über 100% sind dem Vergleichsreifen V1 überlegen und stellen eine Verbesserung dar.

Das ABS-Nassbremsverhalten wurde bestimmt durch den Bremsweg aus 80 km/h bei nasser Fahrbahn.
Das ABS-Trockenbremsverhalten wurde bestimmt durch den Bremsweg aus 100 km/h bei trockener Fahrbahn.
Das Handling ergibt sich aus der Bewertung des Testfahrers.
Der Rollwiderstand entspricht der Rollwiderstandskraft, die auf der entsprechenden Maschine bei 90 km/h gemessen wird.
Die Werte für den Abrieb stellen den Gewichtsverlust des Reifens nach 10.000 gefahrenen Kilometern dar.
Der Schneegriff wurde als Schneetraktion, also als Beschleunigungsvermögen beim Anfahren im 1. Gang in m/sec², bestimmt.

**Tabelle 1**

| **Bestandteile** | **Einheit** | **V1** | **V2** | **V3** | **V4** | **E1** |
|---|---|---|---|---|---|---|
| NR^{a} | phr | 12 | 12 | 12 | 12 | 12 |
| BR^{b} | phr | 24 | 24 | 24 | 24 | 24 |
| SSBR^{c} | | 64 | 64 | 64 | 64 | 64 |
| Kieselsäure^{d} | phr | 100 | 100 | 100 | -- | -- |
| Kieselsäure^{e} | phr | -- | -- | -- | 100 | 100 |
| Ruß, N339 | phr | 7 | 7 | 7 | 7 | 7 |
| Silan^{f} | phr | 7,2 | 7,2 | 7,2 | 9,5 | 9,5 |
| Weichmacher^{g} | phr | 40 | -- | -- | 5 | 5 |
| Flüssiges Polymer^{h} | phr | -- | 40 | -- | 40 | -- |
| Flüssiges Polymer' | phr | -- | -- | 40 | -- | 40 |
| ZnO | phr | 2 | 2 | 2 | 2 | 2 |
| Alterungsschutzmittel /Ozonschutzmittel | phr | 5 | 5 | 5 | 5 | 5 |
| Verarbeitungshilfsmittel^{j} | phr | 3 | 3 | 3 | 3 | 3 |
| DPG | phr | 2,2 | 2,2 | 2,2 | 2,2 | 2,2 |
| CBS | phr | 1,9 | 2,6 | 2,6 | 2,6 | 2,6 |
| Schwefel | phr | 1,55 | 2,1 | 2,1 | 2,1 | 2,1 |

| | | | | | | |
|---|---|---|---|---|---|---|
| ^{a} TSR; ^{b} BR mit cis-Anteil von größer 80 Gew. -%; ^{c}Nipol NS616, Fa. Zeon, OH-modifiziert ^{d} Zeosil 1165MP, Fa. Rhodia (BET 149 m²/g, CTAB 154 m²/g); ^{e}Premium 200MP, Fa. Rhodia (BET 200 m²/g, CTAB 200 m²/g); ^{f} TESPD Silquest A1589 (Momentive Performance Materials); ^{g} TDAE; ^{h} flüssiges Polybutadien, M_{w}= 2500g/mol, Tg = -90°C, Ricon 130, Fa. Sartomer; ⁱflüssiges Polybutadien, M_{w} 1100g/mol, T_{g} = -95°C, Pro3226, Fa. Sartomer; ^{j} Aminofettsäure und Aminofettsäurederivate, HT254, Fa. Schill&Seilacher; | | | | | | |

**Tabelle 2**

| **Reifeneigenschaft** | **V1** | **V2** | **V3** | **V4** | **E1** |
|---|---|---|---|---|---|
| Trocken-Handling | 100 | 96 | 92 | 96 | 100 |
| ABS-Trockenbremsen | 100 | 98 | 97 | 98 | 100 |
| ABS-Nassbremsen | 100 | 100 | 100 | 100 | 100 |
| Rollwiderstand | 100 | 95 | 100 | 95 | 100 |
| Abrieb | 100 | 120 | 130 | 120 | 130 |
| Schneetraktion | 100 | 104 | 106 | 104 | 106 |

Anhand der Tabelle 2 zeigt sich, dass durch die Verwendung eines flüssigen Polymers mit einem relativ niedrigen mittleren Molgewicht M_{w} und einer sehr niedrigen Glasübergangstemperatur T_{g} alleine (siehe V2 und V3) sich zwar das Abriebverhalten verbessern lässt, gleichzeitig allerdings das Trockenbrems- und / oder das Rollwiderstandsverhalten verschlechtert. Erst die Verwendung einer erfindungsgemäßen Kautschukmischung kann die in dieser Erfindung gestellte Aufgabe zufrieden stellend1 zusammengefasst lösen (siehe E1). Überraschenderweise zeigt sich, dass sich die mittels Schneetraktion bestimmten Wintereigenschaften auf einem ähnlichen Niveau halten oder sogar verbessern.

## Patentansprüche

1. Kautschukmischung, **gekennzeichnet durch** folgende Zusammensetzung:
- 40 bis 95 phr zumindest eines vollständig oder teilweise funktionalisierten Styrolbutadienkautschuks und
- 5 bis 60 phr zumindest eines weiteren polaren oder unpolaren Kautschuks und
- 0,01 bis 35 phr zumindest eines Rußes und
- 10 bis 250 phr zumindest einer Kieselsäure mit einer CTAB-Oberfläche gemäß ASTM D 3765 zwischen 170 und 400 m²/g und
- 0,1 bis 100 phr zumindest eines flüssigen Polymers mit einem mittleren Molgewicht M_{w} zwischen 150 und 1500 g/mol und einer Glasübergangstemperatur T_{g} kleiner oder gleich -30°C und
- weitere Zusatzstoffe.

2. Kautschukmischung nach Anspruch 1, **dadurch gekennzeichnet, dass** sie 50 bis 95 phr zumindest eines vollständig oder teilweise funktionalisierten Styrolbutadienkautschuks enthält.

3. Kautschukmischung nach einem der Ansprüche 1 bis 2, **dadurch gekennzeichnet, dass** der Styrolbutadienkautschuk mit Hydroxylgruppen und /oder Epoxygruppen und / oder Siloxangruppen und / oder Aminogruppen und /oder Phtalocyaningruppen und / oder Aminosiloxangruppen und / oder mit Carboxy-Gruppen vollständig oder teilweise funktionalisiert ist.

4. Kautschukmischung nach einem der Ansprüche 1 bis 3, **dadurch gekennzeichnet, dass** sie 20 bis 200 phr Kieselsäure enthält.

5. Kautschukmischung nach einem der Ansprüche 1 bis 4, **dadurch gekennzeichnet, dass** die Kieselsäure eine CTAB-Oberfläche zwischen 180 m²/g und 300 m²/g hat.

6. Kautschukmischung nach einem der Ansprüche 1 bis 5, **dadurch gekennzeichnet, dass** sie 1 bis 90 phr eines flüssigen Polymers mit einem mittleren Molgewicht M_{w} zwischen 150 und 1500 g/mol und einer Glasübergangstemperatur T_{g} kleiner oder gleich -30°C enthält.

7. Kautschukmischung nach Anspruch 6, **dadurch gekennzeichnet, dass** sie 10 bis 80 phr eines flüssigen Polymers mit einem mittleren Molgewicht M_{w} zwischen 150 und 1500 g/mol und einer Glasübergangstemperatur T_{g} kleiner oder gleich -30°C enthält.

8. Kautschukmischung nach einem der Ansprüche 1 bis 7, **dadurch gekennzeichnet, dass** das flüssige Polymer ein mittleres Molgewicht M_{w} zwischen 150 und 1300 g/mol hat.

9. Kautschukmischung nach Anspruch 8, **dadurch gekennzeichnet, dass** das flüssige Polymer ein mittleres Molgewicht M_{w} zwischen 150 und 1100 g/mol hat.

10. Kautschukmischung nach einem der Ansprüche 1 bis 9, **dadurch gekennzeichnet, dass** das flüssige Polymer eine Glasübergangstemperatur T_{g} kleiner oder gleich -65°C hat.

11. Kautschukmischung nach Anspruch 10, **dadurch gekennzeichnet, dass** das flüssige Polymer eine Glasübergangstemperatur T_{g} kleiner oder gleich -75°C hat.

12. Kautschukmischung nach einem der Ansprüche 1 bis 11, **dadurch gekennzeichnet, dass** das flüssige Polymer ein flüssiger Polybutadienkautschuk ist.

13. Kautschukmischung nach einem der Ansprüche 1 bis 12, **dadurch gekennzeichnet, dass** das flüssige Polymer einen Vinylanteil von 0,1 bis 30 Gew. -% hat.

14. Verwendung einer Kautschukmischung nach einem der Ansprüche 1 bis 13 zur Herstellung eines Reifens.

15. Verwendung einer Kautschukmischung nach Anspruch 14 zur Herstellung eines Laufstreifens und / oder einer Body-Mischung eines Reifens.

## Claims

1. Rubber mixture, **characterized by** the following constitution:
- 40 to 95 phr of at least one fully or partially functionalized styrene-butadiene rubber and
- 5 to 60 phr of at least one other polar or nonpolar rubber and
- 0.01 to 35 phr of at least one carbon black and
- 10 to 250 phr of at least one silica with a CTAB surface area of from 170 to 400 m²/g in accordance with ASTM D3765 and
- 0.1 to 100 phr of at least one liquid polymer with an average molar mass M_{w} of from 150 to 1500 g/mol and with a glass transition temperature Tg below or equal to -30°C and
- other additional substances.

2. Rubber mixture according to Claim 1, **characterized in that** it comprises from 50 to 95 phr of at least one fully or partially functionalized styrene-butadiene rubber.

3. Rubber mixture according to Claim 1 or 2, **characterized in that** the styrene-butadiene rubber has been fully or partially functionalized with hydroxy groups and/or epoxy groups and/or siloxane groups and/or amino groups and/or phthalocyanine groups and/or amino siloxane groups and/or with carboxy groups.

4. Rubber mixture according to any of Claims 1 to 3, **characterized in that** it comprises from 20 to 200 phr of silica.

5. Rubber mixture according to any of Claims 1 to 4, **characterized in that** the silica has a CTAB surface area of from 180 m²/g to 300 m²/g.

6. Rubber mixture according to any of Claims 1 to 5, **characterized in that** it comprises from 1 to 90 phr of a liquid polymer with an average molar mass M_{w} of from 150 to 1500 g/mol and with a glass transition temperature Tg below or equal to -30°C.

7. Rubber mixture according to Claim 6, **characterized in that** it comprises from 10 to 80 phr of a liquid polymer with an average molar mass M_{w} of from 150 to 1500 g/mol and with a glass transition temperature Tg below or equal to -30°C.

8. Rubber mixture according to any of Claims 1 to 7, **characterized in that** the liquid polymer has an average molar mass M_{w} of from 150 to 1300 g/mol.

9. Rubber mixture according to Claim 8, **characterized in that** the liquid polymer has an average molar mass M_{w} of from 150 to 1100 g/mol.

10. Rubber mixture according to any of Claims 1 to 9, **characterized in that** the liquid polymer has a glass transition temperature Tg below or equal to -65°C.

11. Rubber mixture according to Claim 10, **characterized in that** the liquid polymer has a glass transition temperature Tg below or equal to -75°C.

12. Rubber mixture according to any of Claims 1 to 11, **characterized in that** the liquid polymer is a liquid polybutadiene rubber.

13. Rubber mixture according to any of Claims 1 to 12, **characterized in that** the liquid polymer has a vinyl content of from 0.1 to 30% by weight.

14. Use of a rubber mixture according to any of Claims 1 to 13 for producing a tyre.

15. Use of a rubber mixture according to Claim 14 for producing a tread and/or a body mixture of a tyre.

## Revendications

1. Mélange de caoutchouc, **caractérisé par** la composition suivante :
- 40 à 95 pce d'au moins un caoutchouc de styrène-butadiène fonctionnalisé en totalité ou en partie, et
- 5 à 60 pce d'au moins un autre caoutchouc polaire ou apolaire, et
- 0,01 à 35 pce d'au moins un noir de carbone, et
- 10 à 250 pce d'au moins une silice d'une surface CTAB selon ASTM D 3765 comprise entre 170 et 400 m²/g, et
- 0,1 à 100 pce d'au moins un polymère liquide d'un poids moléculaire moyen M_{w} compris entre 150 et 1 500 g/mol et d'une température de transition vitreuse Tg inférieure ou égale à -30 °C, et
- des additifs supplémentaires.

2. Mélange de caoutchouc selon la revendication 1, **caractérisé en ce qu'**il contient 50 à 95 pce d'au moins un caoutchouc de styrène-butadiène fonctionnalisé en totalité ou en partie.

3. Mélange de caoutchouc selon l'une quelconque des revendications 1 à 2, **caractérisé en ce que** le caoutchouc de styrène-butadiène est fonctionnalisé en totalité ou en partie avec des groupes hydroxyle et/ou des groupes époxy et/ou des groupes siloxane et/ou des groupes amino et/ou des groupes phtalocyanine et/ou des groupes aminosiloxane et/ou des groupes carboxy.

4. Mélange de caoutchouc selon l'une quelconque des revendications 1 à 3, **caractérisé en ce qu'**il contient 20 à 200 pce de silice.

5. Mélange de caoutchouc selon l'une quelconque des revendications 1 à 4, **caractérisé en ce que** la silice a une surface CTAB comprise entre 180 m²/g et 300 m²/g.

6. Mélange de caoutchouc selon l'une quelconque des revendications 1 à 5, **caractérisé en ce qu'**il contient 1 à 90 pce d'un polymère liquide d'un poids moléculaire moyen M_{w} compris entre 150 et 1 500 g/mol et d'une température de transition vitreuse Tg inférieure ou égale à -30 °C.

7. Mélange de caoutchouc selon la revendication 6, **caractérisé en ce qu'**il contient 10 à 80 pce d'un polymère liquide d'un poids moléculaire moyen M_{w} compris entre 150 et 1 500 g/mol et d'une température de transition vitreuse Tg inférieure ou égale à -30 °C.

8. Mélange de caoutchouc selon l'une quelconque des revendications 1 à 7, **caractérisé en ce que** le polymère liquide a un poids moléculaire moyen M_{w} compris entre 150 et 1 300 g/mol.

9. Mélange de caoutchouc selon la revendication 8, **caractérisé en ce que** le polymère liquide a un poids moléculaire moyen M_{w} compris entre 150 et 1 100 g/mol.

10. Mélange de caoutchouc selon l'une quelconque des revendications 1 à 9, **caractérisé en ce que** le polymère liquide a une température de transition vitreuse Tg inférieure ou égale à -65 °C.

11. Mélange de caoutchouc selon la revendication 10, **caractérisé en ce que** le polymère liquide a une température de transition vitreuse Tg inférieure ou égale à -75 °C.

12. Mélange de caoutchouc selon l'une quelconque des revendications 1 à 11, **caractérisé en ce que** le polymère liquide est un caoutchouc de polybutadiène liquide.

13. Mélange de caoutchouc selon l'une quelconque des revendications 1 à 12, **caractérisé en ce que** le polymère liquide a une proportion de vinyle de 0,1 à 30 % en poids.

14. Utilisation d'un mélange de caoutchouc selon l'une quelconque des revendications 1 à 13 pour la fabrication d'un pneu.

15. Utilisation d'un mélange de caoutchouc selon la revendication 14 pour la fabrication d'une bande de roulement et/ou d'un mélange de carcasse d'un pneu.
